# EUROPEAN PATENT APPLICATION

(11) **EP 3 923 093 A2**
(43) Date of publication of application: **15.12.2021**
(21) Application number: 21169131.6
(22) Date of filing: 19.04.2021
(51) Int. Cl.: G05B 19/042, B60T 13/66, G05B 23/02

(54) **CONTROL DEVICE**

(30) Priority: 21.05.2020 JP 2020089192
(71) Applicant: Nabtesco Corporation, Tokyo 102-0093 (JP)
(72) Inventor: MIZUFUNE, Toru, Tokyo (JP)
(74) Representative: Grünecker Patent- und Rechtsanwälte PartG mbB

(57) **Abstract**

A control device (10) includes a controlling unit (11) for controlling outputs from a plurality of devices (20, 30) such that a total of the outputs from the devices (20, 30) reaches a target output. The control device (10) also includes a calculating unit (12) for calculating an accumulated load of each device (20, 30) over a predetermined period of time. The controlling unit (11) controls the outputs from the devices (20, 30) such that the accumulated loads calculated for the respective devices (20, 30) become more equal to each other and that the total of the outputs from the devices (20, 30) reaches the target output.

## Description

The present invention relates to a control device.

In a freezer apparatus disclosed in Japanese Laid-Open Patent Publication No. 2002-206812 ("the '812 Publication"), a control device is configured to control compressors, condensers, pressure reducing devices, and evaporators. The control device disclosed in the '812 Publication accumulates the operation time of each compressor, so that the compressor with the shortest accumulated operation time is preferentially selected to operate.

According to the control by the control device disclosed in the '812 Publication, the operation times of the compressors can become more equal to each other, but it is not assured that their lives become equal to each other. This accordingly creates a demand for equalizing the lives of devices to be controlled by the control device, not only the lives of the compressors to be controlled by the control device.

The present invention is made in view of the foregoing, and one object of the present invention is to provide a control device capable of controlling a plurality of devices such that their lives can become equal to each other.

In order to achieve the above object and in accordance with one aspect of the present invention, provided is a control device that includes a controlling unit for controlling outputs from a plurality of devices such that a total of the outputs from the devices reaches a target output. The control device also includes a calculating unit for calculating an accumulated load of each device over a predetermined period of time. The controlling unit controls the outputs from the devices such that the accumulated loads calculated for the respective devices become more equal to each other and that the total of the outputs from the devices reaches the target output.

As the accumulated load on a device increases, the life of the device decreases. According to the above-described design, the outputs from the plurality of devices are controlled such that the accumulated loads on the plurality of devices become more equal to each other. This can equalize the lives of the devices.

In the above-described control device, it is preferable that the calculating unit calculates a life of each device based on the accumulated load on the device and that the controlling unit controls the outputs from the devices such that the lives of the devices calculated by the calculating unit become more equal to each other and that the total of the outputs from the devices reaches the target output.

In the above-described control device, it is preferable that the calculating unit calculates a load increasing rate for each device based on the accumulated load on the device and that the controlling unit controls the outputs from the devices based on the load increasing rates calculated for the devices by the calculating unit.

In the above-described control device, it is preferable that when a second one of the devices has a higher load increasing rate than a first one of the devices, the controlling unit decreases the output from the second device and increases the output from the first device.

In the above-described control device, it is preferable that the plurality of devices are a plurality of electric compressors, and each electric compressor has a motor provided therein and is configured to hold compressed air in a tank when the motor is driven, that the target output is a target tank pressure, and that the controlling unit controls an output from the motor provided in each electric compressor such that accumulated loads on the electric compressors calculated for the respective electric compressors become more equal to each other and that the compressed air output from the electric compressors allows a pressure within the tank to reach the target tank pressure.

In the above-described control device, it is preferable that the calculating unit calculates the accumulated load on each electric compressor based on (i) at least one of an operation time of a fan for cooling the motor and an operation time of the motor and (ii) at least one value selected from the group consisting of the number of vibrations of a bearing provided in the motor, current used to drive the motor, voltage used to drive the motor, power consumed by the motor, an ambient temperature around the motor, and the number of rotations of the motor.

In the above-described control device, it is preferable that the electric compressors are connected to the tank through pipes having different lengths, and that the controlling unit controls the output from the motor in each electric compressor based on the accumulated loads and the lengths of the pipes such that the accumulated loads on the electric compressors become more equal to each other and that the pressure within the tank reaches the target tank pressure.

In the above-described control device, it is preferable that the plurality of devices are a plurality of brake devices for producing a braking force against a train, that the target output is a target deceleration rate of the train, and that the controlling unit controls the braking force produced by each brake device such that the measured accumulated loads on the brake devices become more equal to each other and that a deceleration rate of the train reaches the target deceleration rate.

In the above-described control device, it is preferable that each brake device produces the brake force by driving a friction member with a driving force produced by a driving unit and that the calculating unit calculates the accumulated load on each brake device based on an abrasion amount of the friction member.

In the above-described control device, it is preferable that each brake device includes: a relay valve for adjusting a pressure of compressed air fed from a tank; a brake cylinder for receiving the pressure-adjusted compressed air fed thereto; and a friction member for producing a brake force when driven by an output from the brake cylinder, that the calculating unit calculates an accumulated load on the relay valve based on a difference between (i) a target pressure of the compressed air fed to the brake cylinder, where the target pressure is calculated based on the target deceleration rate and (ii) an actual pressure of the compressed air actually fed to the brake cylinder, where the actual pressure is detected by a sensor, and that the controlling unit controls the relay valves such that the accumulated loads on the relay valves become more equal to each other and that the deceleration rate of the train reaches the target deceleration rate.

In the above-described control device, it is preferable that the train is made up of a plurality of cars, that the brake devices are provided in each of the cars, and that the controlling unit controls the brake force produced by each brake device based on the accumulated loads and a position of a car with the brake devices in the train such that the accumulated loads on the brake devices become more equal to each other and that the deceleration rate of the train reaches the target deceleration rate.

In order to achieve the above object and in accordance with another aspect of the present invention, provided is a control device that includes a controlling unit for controlling outputs from a plurality of electric compressors such that a total of the outputs from the electric compressors reaches a target tank pressure, where each electric compressor has a motor provided therein and is configured to hold compressed air in a tank when the motor is driven. The control device also includes a calculating unit for calculating an accumulated load on each electric compressor based on (i) at least one of an operation time of a fan for cooling the motor and an operation time of the motor and (ii) at least one value selected from the group consisting of the number of vibrations of a bearing provided in the motor, current used to drive the motor, voltage used to drive the motor, power consumed by the motor, an ambient temperature around the motor, and the number of rotations of the motor. The controlling unit controls an output from the motor provided in each electric compressor such that the accumulated loads on the electric compressors measured for the respective electric compressors become more equal to each other and that the compressed air output from the electric compressors allows a pressure within the tank to reach the target tank pressure.

As the accumulated load on an electric compressor increases, the life of the electric compressor decreases. According to the above-described design, the outputs from the plurality of electric compressors are controlled such that the accumulated loads on the plurality of electric compressors become more equal to each other. This can equalize the lives of the electric compressors.

In order to achieve the above object and in accordance with another aspect of the present invention, provided is a control device that includes a controlling unit for controlling outputs from a plurality of brake devices such that a total of the outputs from the brake devices provides for a target deceleration rate of a train, where each brake device is configured to produce a brake force against the train by driving a friction member with a driving force produced by a driving unit. The control device also includes a calculating unit for calculating an accumulated load on each brake device based on an abrasion amount of the friction member. The controlling unit controls the driving unit provided in each brake device based on the abrasion amount of the friction member such that the accumulated loads on the brake devices become more equal to each other and that a deceleration rate of the train reaches the target deceleration rate.

The abrasion amount of the friction member depends on how much the brake device is used. As the accumulated load on the brake device increases, the life of the brake device decreases. In the case of a train made up of cars, the cars have different weights, and the plurality of brake devices receive different loads. According to the above-described design, the abrasion amount of the friction member is consulted to control the plurality of brake devices such that the accumulated loads on the brake devices become more equal to each other. This can equalize the lives of the brake devices.

In order to achieve the above object and in accordance with one aspect of the present invention, provided is a control device that includes a controlling unit for controlling outputs from a plurality of brake devices such that a total of the outputs from the brake devices provides for a target deceleration rate of a train, where each brake device includes: a relay valve for adjusting a pressure of compressed air fed from a tank; a brake cylinder for receiving the pressure-adjusted compressed air fed thereto; and a friction member for producing a brake force against the train when driven by an output from the brake cylinder. The control device also includes a calculating unit for calculating an accumulated load on the relay valve based on a difference between (i) a target pressure of the compressed air fed to the brake cylinder, where the target pressure is calculated based on the target deceleration rate, and (ii) an actual pressure of the compressed air actually fed to the brake cylinder, where the actual pressure is detected by a sensor. The controlling unit controls the relay valve provided in each brake device such that the accumulated loads on the relay valves become more equal to each other and that a deceleration rate of the train reaches the target deceleration rate.

As the accumulated load on the brake device increases, the life of the brake device decreases. In the case of a train made up of cars, the cars have different weights, and the plurality of brake devices receive different loads. According to the above-described design, the relay valves provided for the brake devices are controlled such that the accumulated loads on the relay valves become more equal to each other. This can equalize the lives of the relay valves.

Other aspects and advantages of the present invention will be made apparent from the following description, taken in conjunction with the accompanying drawings, illustrating by way of example the principles of the present invention.

The invention, together with objects and advantages thereof, may best be understood by reference to the following description of the presently preferred embodiments together with the accompanying drawings in which:
Fig. 1 is a block diagram schematically showing the configuration of a train including a control device and electric compressors of a first embodiment according to the present invention;
Fig. 2 is a block diagram schematically showing the configuration of the electric compressor of the first embodiment;
Fig. 3 is a flow chart showing how the control device of the first embodiment operates;
Fig. 4 is a block diagram schematically showing the configuration of a train including a control device and brake devices of a second embodiment according to the present invention;
Fig. 5 is a cross-sectional view showing the configuration of the brake device of the second embodiment;
Fig. 6 is a flow chart showing how the control device of the second embodiment operates; and
Fig. 7 is a flow chart showing how a control device of a modification example operates.

### <First Embodiment

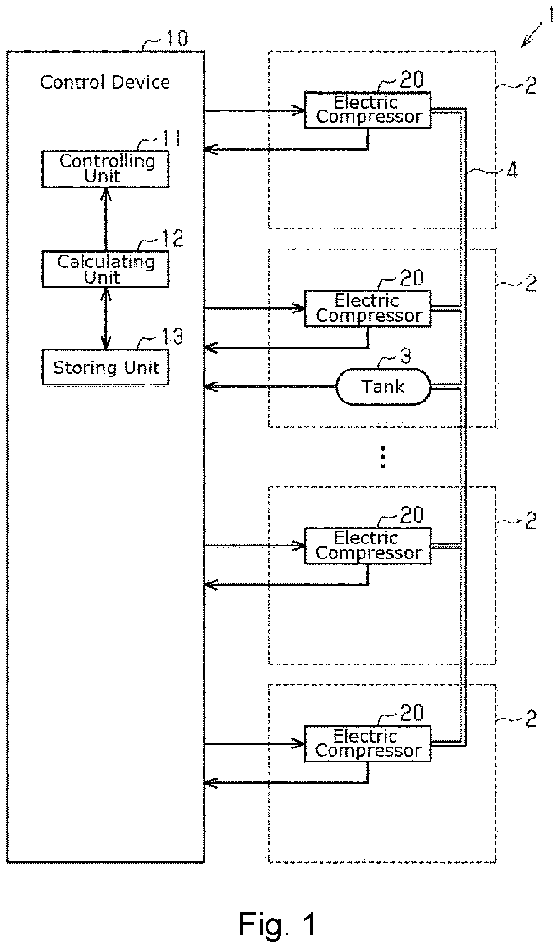

With reference to Figs. 1 to 3, a description is given of a control device of a first embodiment according to the present invention. The control device is configured to control electric compressors provided in a train. Although installed in the train, the control device is shown outside the train for the sake of description.

As shown in Fig. 1, a train 1 is made up of a plurality of cars 2. The train 1 is provided with a tank 3 configured to feed compressed air to a brake device, which is not shown. Each car 2 is provided with an electric compressor 20 configured to feed compressed air to the tank 3. The tank 3 is connected to the electric compressors 20 through pipes 4, which have different lengths. The train 1 may include a plurality of tanks 3 depending on the length of the cars 2 making up the train 1. In addition, one or more of the cars 2 may not be provided with the electric compressor 20.

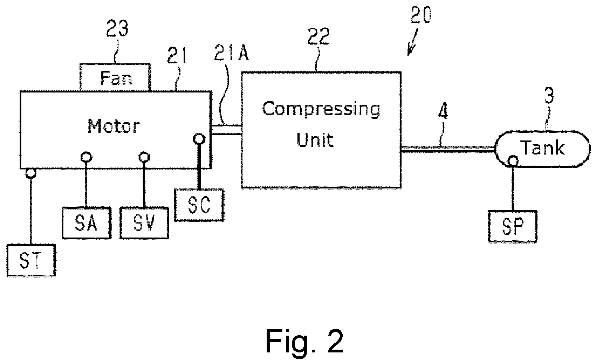

As shown in Fig. 2, the electric compressors 20 include a motor 21 and a compressing unit 22 for compressing air when driven by the motor 21. The motor 21 is connected to the compressing unit 22 through a rotational shaft 21A. The compressed air produced by the compressing unit 22 is delivered out to the pipe 4 and held in the tank 3. The motor 21 includes a fan 23 for cooling the motor 21. The fan 23 is operated when the temperature of the motor 21 is higher than a prescribed temperature, in other words, when the load is high.

The electric compressors 20 have a vibration sensor SC for detecting the number of vibrations of the bearing of the rotational shaft 21A, a current sensor SA for detecting the current used to drive the motor 21, a voltage sensor SV for detecting the voltage used to drive the motor 21, and a temperature sensor ST for detecting the ambient temperature of the motor 21 installed therein. The tank 3 is provided with a pressure sensor SP for detecting the pressure within the tank 3.

As shown in Fig. 1, the train 1 includes a control device 10 for controlling the electric compressors 20. The control device 10 is provided in one of the cars 2 making up the train 1. The vibration sensor SC, current sensor SA, voltage sensor SV, temperature sensor ST, and pressure sensor SP output the detected values to the control device 10.

The control device 10 includes a controlling unit 11 for controlling the outputs from the electric compressors 20 provided in the train 1. The controlling unit 11 controls the outputs such that the total of the outputs from the electric compressors 20 becomes equal to a target tank pressure. The control device 10 also includes a calculating unit 12 for calculating, for each of the electric compressors 20, the accumulated load over a predetermined period of time, where the load is measured in each electric compressor 20. The predetermined period of time may start when the electric compressor 20 is installed or may be determined in any manner. The control device 10 also includes a storing unit 13 for storing the accumulated load on each electric compressor 20. The calculating unit 12 reads from the storing unit 13 the load that has been accumulated until the current calculation and stores in the storing unit 13 the accumulated load that is calculated by adding the result of the current calculation to the read load.

The calculating unit 12 is capable of calculating the number of vibrations of the bearing included in the motor 21 based on the detected value input from the vibration sensor SC to the control device 10. The calculating unit 12 is capable of calculating the current used to drive the motor 21 based on the detected value input from the current sensor SA to the control device 10. The calculating unit 12 is capable of calculating the voltage used to drive the motor 21 based on the detected value input from the voltage sensor SV to the control device 10. The calculating unit 12 is capable of calculating the ambient temperature of the motor 21 based on the detected value input from the temperature sensor ST to the control device 10. The calculating unit 12 is capable of calculating the operation time based on the operation information of the fan 23. The calculating unit 12 is capable of obtaining the number of rotations of the motor 21 and the operation time of the motor 21 from the controlling unit 11. The temperature sensor ST may detect not only the ambient temperature of the motor 21 but also the temperature of the motor 21 itself or the temperature of the compressing unit 22.

The calculating unit 12 obtains the operation time of the motor 21 and at least one value selected from the group consisting of the number of vibrations of the bearing provided in the motor 21, the current used to drive the motor 21, the voltage used to drive the motor 21, the power consumed by the motor 21, the ambient temperature of the motor 21, and the number of rotations of the motor 21, and calculates the load on each electric compressor 20 based on the obtained values. The calculating unit 12 adds the calculated load to the accumulated load read from the storing unit 13, thereby calculating for each electric compressor 20 the current accumulated load.

Here, the output from each electric compressor 20 does not remain constant, and the load on the electric compressor 20 therefore can not be calculated only based on the operation time. For this reason, the calculating unit 21 calculates the load on the electric compressor 20 based on the operation time and additionally at least one another value. In other words, the load is a numerical value representing the amount of degradation in the electric compressor 20 over the operation time and can be estimated based on the respective detected values. The accumulated load is a result of adding up the loads. For example, at least one selected from the group consisting of the number of vibrations of the bearing provided in the motor 21, the current used to drive the motor 21, the voltage used to drive the motor 21, the power consumed by the motor 21, the ambient temperature of the motor 21, and the number of rotations of the motor 21 is employed, so that the varying load during the operation time can be obtained. It is also likely that the accumulated load is affected by temperature. Specifically, when the ambient temperature around the motor 21 is low, the load applied to the motor 21 and compressing unit 22 is low. When the ambient temperature around the motor 21 is high, the load applied to the motor 21 and compressing unit 22 is high. The load is therefore calculated based on the detected values obtained while the fan 23 is operating. In this way, the load on the electric compressor 20 can be more accurately calculated. Alternatively, the load may be calculated based on a part of the operation time during which the motor 21 is operating, in which the ambient temperature around the motor 21 is equal to or higher than a predetermined level. The load on the electric compressor 20 can be increasingly more accurately calculated by employing more of the values. For example, if the number of vibrations of the bearing and the number of rotations of the motor 21 are employed, the load on the bearing can be calculated based on the ratio of the number of vibrations of the bearing to the number of rotations. If the current, voltage, or consumed power of the motor 21 and the number of rotations of the motor 21 are employed, the load on the motor 21 can be calculated based on the ratio of the current, voltage, or consumed power to the number of rotations. Alternatively, the operation time and at least one value may be used to calculate the quantity of work done by the electric compressor 20 on an external component, and the load may be calculated based on the quantity of work. In place of the operation time of the motor 21, the operation time of the fan 23 may be used to calculate the load. If such is the case, the operation time of the fan 23 and at least one value may be used to calculate the load on the electric compressor 20.

The calculating unit 12 has, in advance, programs for calculating the load on the electric compressor 20 based on the obtained values or maps associating the detected value with the load on the electric compressor 20. The calculating unit 12 consults the calculation programs or maps to calculate the load on each electric compressor 20. For example, the calculating unit 12 may use at least one value selected from the group consisting of the number of vibrations of the bearing provided in the motor 21, the current used to drive the motor 21, the voltage used to drive the motor 21, the power consumed by the motor 21, the ambient temperature around the motor 21, and the number of rotations of the motor 21 as the amount of the load per unit time and calculate the load on the electric compressor 20 using an expression of [the amount of the load per unit time] × [the operation time of the motor 21 (the operation time of the fan 23)].

The calculating unit 12 calculates the life of each electric compressor 20 based on the accumulated load on the electric compressor 20. In other words, the calculating unit 12 assumes that the life of the electric compressor 20 ends if the accumulated load increases to reach a prescribed value. The life indicates a period of time from the present time to when the electric compressor 20 can no longer be used. The calculating unit 12 calculates the life based on the difference between the calculated accumulated load and the prescribed value. It may be sufficient to calculate only the accumulated load if the plurality of electric compressors 20 start to be used at the same time. It is, however, beneficial to calculate the life if the plurality of electric compressors 20 start to be used at different points of time. It is also beneficial to calculate the life when the electric compressors 20 are of different types since the same load may affect the lives of the electric compressors 20 differently.

The calculating unit 12 calculates the load increasing rate at which the load on each electric compressor 20 increases. The load increasing rate denotes the amount of the increase in load within a unit time. The devices such as the electric compressors 20 have such a tendency that the load increases as the device is about to break down. For this reason, if the increasing rate is equal to or higher than a prescribed value, this is deemed to indicate that the device is about to break down. In this case, it is desirable to control the electric compressors 20 such that the output from the electric compressor 20 for which the increasing rate is equal to or higher than the prescribed value is reduced.

The controlling unit 11 calculates the output from the motor 21 of each electric compressor 20 and controls the electric compressors 20 to produce the calculated outputs, within the lives calculated by the calculating unit 12 and based on the load increasing rate and accumulated load on each electric compressor 20, which are calculated by the calculating unit 12, such that the accumulated loads on the electric compressors 20 become more equal to each other and that the compressed air output from the electric compressors 20 allows the pressure within the tank 3 to reach the target tank pressure.

To begin with, the controlling unit 11 determines the output from the electric compressor 20 with a high accumulated load or the output from the electric compressor 20 with a high load increasing rate such that the load increases less. From among the electric compressors 20, the controlling unit 11 decreases the output from the electric compressor 20 with a high load increasing rate and increases the outputs from the remaining electric compressors 20. One of the electric compressors 20 that has a relatively low load increasing rate is referred to as a first device and one of the electric compressors 20 that has a relatively high load increasing rate is referred to as a second device. Subsequently, the controlling unit 11 determines the outputs from the other electric compressors 20 such that their outputs can make up for what is lacking to achieve the necessary outputs.

The controlling unit 11 may first determine the proportions of the outputs from the respective electric compressors 20 such that the output from the electric compressor 20 with a high accumulated load or the output from the electric compressor 20 with a high load increasing rate is reduced and then determine necessary outputs to provide for the target tank pressure.

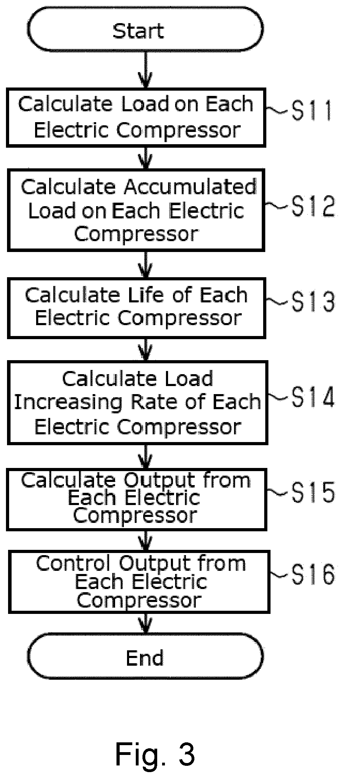

The following now describes the steps of the procedure performed by the control device 10 described above with reference to Fig. 3.

As shown in Fig. 3, the control device 10 calculates the load on each electric compressor 20 (Step S11). More specifically, the calculating unit 12 may obtain the operation time of the motor 21 and at least one value selected from the group consisting of the number of vibrations of the bearing provided in the motor 21, the current used to drive the motor 21, the voltage used to drive the motor 21, the ambient temperature around the motor 21, and the number of rotations of the motor 21, and calculates the load on each electric compressor 20 based on the obtained operation time and at least one value.

The control device 10 calculates the accumulated load on each electric compressor 20 (Step S12). More specifically, the calculating unit 12 reads from the storing unit 13 the last accumulated load on each electric compressor 20 and adds the calculated load to the read accumulated load. In this way, the calculating unit 12 calculates the current accumulated load on each electric compressor 20.

The control device 10 calculates the life of each electric compressor 20 (Step S13). More specifically, the calculating unit 12 calculates the life of each electric compressor 20 based on the difference between the calculated accumulated load on the electric compressor 20 and the prescribed value.

The control device 10 calculates the load increasing rate for each electric compressor 20 (Step S14). In other words, the calculating unit 12 calculates the increasing rate corresponding to the amount of the increase in the load on each electric compressor 20 within a unit time.

The control device 10 calculates the output from each electric compressor 20 (Step S15). More specifically, the controlling unit 11 calculates the output to be made by the motor 21 of each electric compressor 20 based on the load increasing rate and accumulated load of each electric compressor 20 calculated by the calculating unit 12 such that the lives of the electric compressors 20 become more equal to each other and that the compressed air output from the electric compressors 20 allows the pressure within the tank 3 to reach the target tank pressure.

The control device 10 controls the output from each electric compressor 20 (Step S16). More specifically, the controlling unit 11 controls each electric compressor 20 such that the motor 21 in each electric compressor 20 makes the calculated output.

As described above, the control device 10 calculates the accumulated load on each of the electric compressors 20 and controls the electric compressors 20 such that the accumulated loads calculated for the electric compressors 20 become more equal to each other. In this way, the electric compressors 20 can be changed at closer points of time.

Advantageous effects of the first embodiment will be now described.
(1) The outputs from the plurality of electric compressors 20 are controlled such that the accumulated loads on the electric compressors 20 become more equal to each other. This can equalize the lives of the electric compressors 20.
(2) The outputs from the plurality of electric compressors 20 are controlled directly based on the lives of the electric compressors 20, which are calculated based on their accumulated loads. This makes it possible to equalize their lives more accurately.
(3) As the load increasing rates of the electric compressors 20 are taken into consideration, the outputs from the plurality of electric compressors 20 can be controlled in light of whether the electric compressors 20 are about to break down.
(4) The electric compressors 20 have such a tendency that their loads increase when they are about to break down. Therefore, the electric compressors 20 can be saved from breaking down by reducing the output from the electric compressor 20 with a high load increasing rate.
(5) The operation time of the motor 21 (the operation time of the fan 23) determines or changes the conditions of the parts constituting the electric compressors 20. Accordingly, the load on the electric compressors 20 can be calculated based on the operation time and at least one another value.

### <Second Embodiment

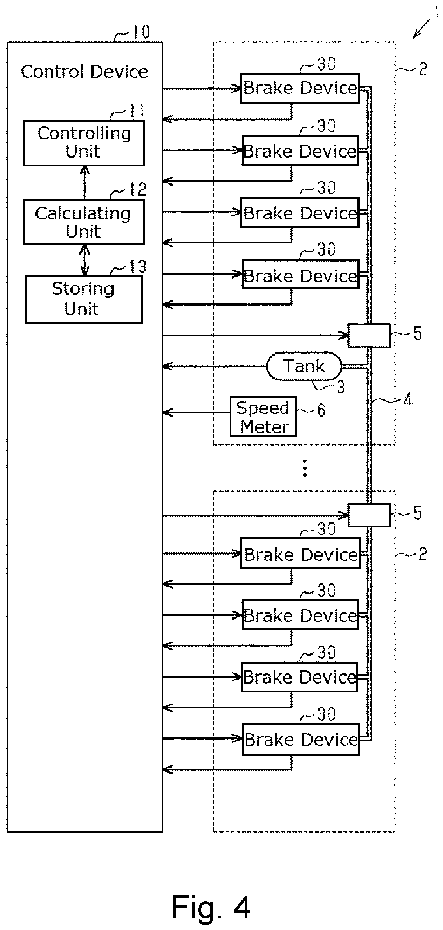

With reference to Figs. 4 to 6, a description is hereinafter given of a control device of a second embodiment according to the present invention. The control device of the second embodiment is different from that of the above-described first embodiment in that the devices are brake devices, not electric compressors. The following description will be focused on the differences from the first embodiment.

As shown in Fig. 4, a train 1 is made up of a plurality of cars 2. Each car 2 has brake devices 30 installed therein for producing brake forces against the corresponding wheels. The train 1 is provided with a tank 3 configured to feed compressed air to each brake device 30. The tank 3 is connected to the brake devices 30 through pipes 4, which have different lengths. For the brake devices 30, a relay valve 5 is provided for adjusting the pressure of the compressed air fed from the tank 3. The relay valve 5 is provided on the pipes 4. The train 1 may include a plurality of tanks 3 depending on the length of the cars 2 constituting the train 1. In addition, one or more of the wheels may not be provided with the brake devices 30. One of the cars 2 is provided with a speed meter 6 for measuring the speed of the train 1.

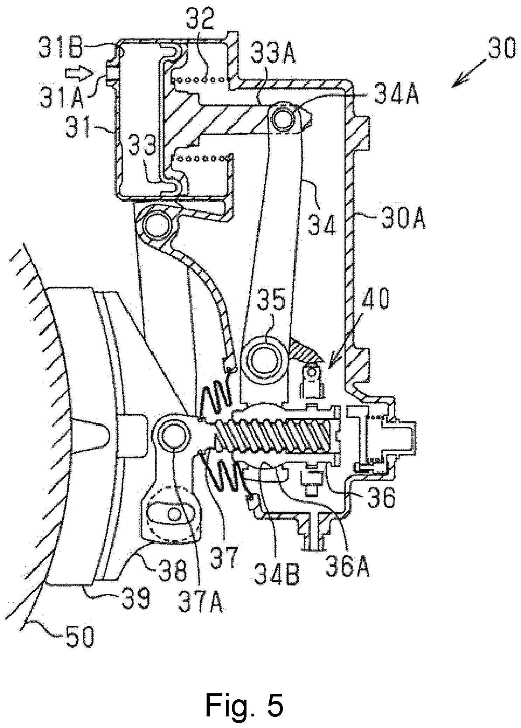

As shown in Fig. 5, the brake devices 30 are tread brake devices having a brake block 39 to be pressed against the tread of a wheel 50. The brake devices 30 include a cylinder 31 having a cylindrical shape and a bottom. The cylinder 31 is connected to the left side in Fig. 5 of a main body 30A. The brake devices 30 have an energizing spring 32 and a piston 33 to be energized by the energizing spring 32. The piston 33 is connected to a driving shaft 33A, and the top end of the driving shaft 33A protrudes into the main body 30A to be rotatably coupled to a brake lever 34 via a coupling pin 34A. The brake lever 34 rotates on a support shaft 35, which is fixedly provided on the main body 30A. One of the ends of the brake lever 34 (the upper one in Fig. 5) is coupled to the driving shaft 33A. The cylinder 31 is referred to as a driving unit.

The bottom of the cylinder 31 (shown on the left side in Fig. 5) has a feeding inlet 31A formed therein for feeding compressed air into the cylinder 31. The compressed air is fed into an operation chamber 31 B demarcated by the cylinder 31 and the piston 33. When the compressed air is fed into the operation chamber 31B, the piston 33 of the brake device 30 moves in such a direction (to the right side in Fig. 5) that the piston 33 protrudes out from the cylinder 31, as a result of which the brake lever 34 is rotated clockwise in Fig. 5. When the compressed air is discharged from the operation chamber 31B, on the other hand, the piston 33 of the brake device 30 is moved by the energizing spring 32 toward the bottom of the cylinder 31 (to the left side in Fig. 5), as a result of which the brake lever 34 is rotated anti-clockwise in Fig. 5.

The brake devices 30 include the above-mentioned brake lever 34, a spherical bearing 36A fitted in a spherical through hole 34B provided on the other end of the brake lever 34, and a cylindrical casing rod 36 having an outer peripheral surface on which the spherical bearing 36A is fixedly provided. On the inner surface of the casing rod 36, a press rod 37 is screwed. On the outer peripheral surface of the casing rod 36, a gap adjuster 40 is provided. The base end of the press rod 37 is screwed into and coupled with the casing rod 36. On the top end of the press rod 37, a brake head 38 is rotatably attached via a coupling pin 37A. The brake head 38 has the brake block 39 attached thereto, which is to be pressed against the tread of the wheel 50. The brake head 38 has a thickness sensor (not shown) installed therein for detecting the abrasion amount of the brake block 39, in other words, the thickness of the brake block 39. The brake block 39 is referred to as a friction member.

When the brake lever 34 turns clockwise in Fig. 5 on the support shaft 35, the brake block 39 is, together with the casing rod 36 and the press rod 37, pushed toward the tread of the wheel 50 so that the brake block 39 is pressed against the tread of the wheel 50. This can brake the rotation of the wheel 50. When the brake lever 34 of the brake device 30 rotates clockwise in Fig. 5, the degree at which the brake block 39 is pressed against the tread of the wheel 50, in other words, the abrasion amount increases as the amount of the rotation increases. When the brake lever 34 turns anti-clockwise in Fig. 5 on the support shaft 35, on the other hand, the brake block 39 is, together with the casing rod 36 and the press rod 37, moved away from the tread of the wheel 50 so that the braking applied on the rotation of the wheel 50 is undone.

As shown in Fig. 4, the train 1 includes a control device 10 for controlling the brake devices 30. The control device 10 is provided in one of the cars 2 making up the train 1. The thickness sensor outputs the detected value to the control device 10.

The control device 10 includes a controlling unit 11 for controlling the outputs from the brake devices 30 provided in the train 1. The controlling unit 11 controls the outputs such that the brake forces produced by the brake devices 30 collectively provide for a target deceleration rate. The controlling unit 11 calculates the deceleration rate based on the speed detected by the speed meter. The control device 10 also includes a calculating unit 12 for calculating, for each of the brake devices 30, the accumulated load over a predetermined period of time, where the load is measured in each brake device 30. The predetermined period of time may start when the brake device 30 is installed or may be determined in any manner. The control device 10 also includes a storing unit 13 for storing the accumulated load on each brake device 30. The calculating unit 12 reads from the storing unit 13 the load that has been accumulated until the current calculation and stores in the storing unit 13 the accumulated load that is calculated by adding the result of the current calculation to the read load.

The calculating unit 12 obtains the abrasion amount of the brake block 39 based on the detected value input from the thickness sensor to the control device 10. The calculating unit 12 calculates the load on each brake device 30 based on the obtained abrasion amount of the brake block 39. The calculating unit 12 then adds the calculated load to the accumulated load read from the storing unit 13 to calculate the current accumulated load on the brake device 30. Here, the load denotes the load or stress applied to the brake device 30.

The calculating unit 12 has, in advance, programs for calculating the load on the brake device 30 based on the obtained abrasion amount of the brake block 39 or maps associating the detected value with the load on the brake device 30. The calculating unit 12 calculates the load on each brake device 30 based on the calculation programs or maps. The calculating unit 12 may calculate the load on the brake device 30 based on the period of time during which the compressed air is fed to the cylinder 31. The calculating unit 12 may calculate the load on the brake device 30 based on the abrasion amount of the brake block 39 and the period of time during which the compressed air is fed. The calculating unit 12 may accumulate the abrasion amount of the brake block 39 obtained at predetermined intervals. In this case, the accumulated abrasion amount is taken as the accumulated load.

The calculating unit 12 calculates the life of each brake device 30 based on the accumulated load on the brake device 30. In other words, the calculating unit 12 assumes that the life of the brake device 30 ends if the accumulated load increases to reach a prescribed value. The life indicates a period of time from the present time to when the brake device 30 can no longer be used. The calculating unit 12 calculates the life based on the difference between the calculated accumulated load and the prescribed value. It may be sufficient to calculate only the accumulated load if the plurality of brake devices 30 start to be used at the same time. It is, however, beneficial to calculate the life if the plurality of brake devices 30 start to be used at different points of time. It is also beneficial to calculate the life when the brake devices 30 are of different types since the same load may affect the lives of the brake devices 30 differently.

The controlling unit 11 controls the cylinder 31 provided in each brake device 30 based on the abrasion amount of the brake block 39 such that the accumulated loads on the brake devices 30 become more equal to each other and that the deceleration rate of the train 1 provided for collectively by the brake devices 30 reaches the target deceleration rate. The control unit 11 may collectively change the brake forces produced by the brake devices 30 that receives the compressed air fed through the same relay valve 5, by controlling the relay valve 5. To change the brake force produced by each brake device 30, each brake device 30 is provided with an adjusting valve for adjusting the compressed air to be fed to the brake device 30. The brake force is controlled by the control device 10 controlling the adjusting valve provided in each brake device.

The controlling unit 11 first determines the brake force produced by the brake device 30 with a high accumulated load such that the load on the brake device 30 increases less. Subsequently, the controlling unit 11 determines the outputs from the other brake devices 30 such that their outputs can make up for what is lacking to achieve the necessary brake forces.

The controlling unit 11 may first determine the proportions of the outputs from the respective brake devices 30 such that a low brake force is required for the brake device 30 with a high accumulated load and then determine necessary brake forces to achieve the target deceleration rate.

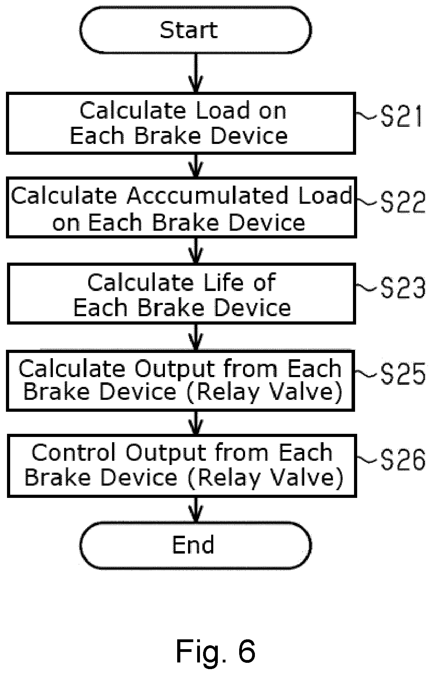

The following now describes the steps of the procedure performed by the control device 10 described above with reference to Fig. 6.

As shown in Fig. 6, the control device 10 calculates the load on each brake device 30 (Step S21). In other words, the calculating unit 12 obtains the abrasion amount based on the thickness of the brake block 39 and calculates the load on each brake device 30 based on the obtained value.

The control device 10 calculates the accumulated load on each brake device 30 (Step S22). More specifically, the calculating unit 12 reads from the storing unit 13 the last accumulated load on each brake device 30 and adds the calculated load to the read accumulated load. In this way, the calculating unit 12 calculates the current accumulated load on each brake device 30.

The control device 10 calculates the life of each brake device 30 (Step S23). More specifically, the calculating unit 12 calculates the life of each brake device 30 based on the difference between the calculated accumulated load on the brake device 30 and the prescribed value.

The control device 10 calculates the output from each brake device 30 (Step S25). More specifically, the controlling unit 11 calculates the brake force to be produced by each brake device 30 based on the accumulated load on each brake device 30 calculated by the calculating unit 12 such that the lives of the brake devices 30 become more equal to each other and that the brake forces produced by the brake devices 30 can provide for the target deceleration rate of the train 1.

The control device 10 controls the output from each brake device 30 (Step S26). More specifically, the controlling unit 11 controls each brake device 30 such that it produces the calculated brake force.

As described above, the control device 10 calculates the accumulated load on each brake device 30 and controls the brake devices 30 such that the calculated accumulated loads on the brake devices 30 become more equal to each other. In this way, the brake devices 30 can be changed at closer points of time.

Advantageous effects of the second embodiment will be now described.
(1) The outputs from the plurality of brake devices 30 are controlled such that the accumulated loads on the brake devices 30 become more equal to each other. This can equalize the lives of the brake devices 30.
(2) The outputs from the plurality of brake devices 30 are controlled directly based on the lives of the brake devices 30, which are calculated based on their accumulated loads. This makes it possible to equalize their lives more accurately.
(3) Since the abrasion amount of the brake block 39 of the brake device 30 is consulted to calculate the accumulated load on the brake device 30, the abrasion amount of the brake block 39 can be directly translated into the load on the brake device 30.

### <Other Embodiments>

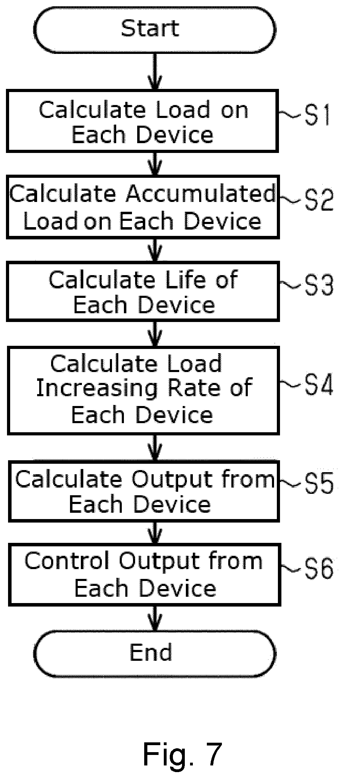

The foregoing embodiments can be modified as described below. The above embodiments and the following modifications can be implemented in combination to the extent where they are technically consistent with each other.
- In the first embodiment, the controlling unit 11 may control the output from the motor 12 in each electric compressor 20 based on the accumulated loads and the lengths of the pipes 4 such that the accumulated loads on the electric compressors 20 become more equal to each other and that the pressure within the tank 3 reaches the target tank pressure. With such a design, since the controlling unit 11 controls the outputs based on the lengths of the pipes 4 of the electric compressors 20, the difference in life between the electric compressors 20 can be reduced.
- In the first embodiment, the calculation of the life of each electric compressor 20 in Step S13 and the calculation of the load increasing rate of each electric compressor 20 in Step S14 may be performed in such an order that Step S13 follows Step S14 or that Steps S13 and S14 may be performed simultaneously.
- In the first embodiment, the load increasing rate of each electric compressor 20 is calculated, and the load increasing rate and accumulated load on each electric compressor 20 are referred to when the controlling unit 11 controls the outputs such that the accumulated loads on the electric compressors 20 become more equal to each other. The controlling unit 11, however, may control the outputs such that the accumulated loads on the electric compressors 20 become more equal to each other without calculating the load increasing rates of the electric compressors 20. In other words, Step S14 in Fig. 3 may be skipped.
- In the first embodiment, the life of each electric compressor 20 is calculated and the controlling unit 11 controls the outputs such that the lives of the electric compressors 20 become more equal. The controlling unit 11, however, may control the outputs such that the accumulated loads on the electric compressors 20 become more equal to each other without calculating the lives of the electric compressors 20. In other words, Step S13 in Fig. 3 may be skipped.
- In the second embodiment, the calculating unit 12 calculates the accumulated load on the relay valve 5 based on the difference between (i) the target pressure of the compressed air fed to the cylinder 31, where the target pressure is calculated based on the target deceleration rate, and (ii) the actual pressure of the compressed air actually fed to the cylinder 31, where the actual pressure is detected by a sensor, and the controlling unit 11 controls the relay valves 5 such that the accumulated loads on the relay valves 5 become more equal to each other and that the deceleration rate of the train 1 provided for by the brake devices 30 reaches the target deceleration rate. According to the above-described design, the controlling unit 11 controls the relay valves 5 such that the accumulated loads on the relay valves 5 provided in the brake devices 30 become more equal to each other. This can equalize the lives of the relay valves 5.
- In the second embodiment, the controlling unit 11 controls the brake forces produced by the brake devices 30 based on the accumulated loads and the position of a car 2 with the brake devices 30 in the train 1 such that the accumulated loads on the brake devices 30 become more equal to each other and that the deceleration rate of the train 1 provided for by the brake devices 30 reaches the target deceleration rate. With such a design, since the controlling unit 11 controls the brake forces based on the position of the brake devices 30 in the train 21 and the difference in life between the brake devices 30 and between the relay valves 5 can be reduced.
- In the second embodiment, the control device 10 is configured to control the brake devices 30, which are tread brake devices. However, the control device 10 may be configured to control disc brake devices, in which the brake force is produced by a caliper device sandwiching the disc fixedly provided on the shaft of the wheel.
- The devices are electric compressors in the first embodiment and brake devices in the second embodiment. The control device 10 may be configured to control not only the electric compressors or brake devices, but also other devices.
- In the first and second embodiments described above, the control device 10 is configured to control the devices provided in the train 1, but may be configured to control devices not provided in a train. For example, as shown in Fig. 7, the control device may calculate the load on each device based on the value obtained from sensors and the like (Step S1), calculate the accumulated load on each device (Step S2), calculate the life of each device (Step S3), and calculate the load increasing rate of each device (Step S4). The control device may further calculate the output to be made by each device such that the accumulated loads on the devices become more equal to each other and that the total of the outputs from the devices becomes equal to a target output (Step S5). The control device may further control the devices such that they can make the calculated outputs (Step S6). The calculation of the life of each device in Step S3 and the calculation of the load increasing rate of each device in Step S4 may be performed in such an order that Step S3 follows Step S4 or that Steps S3 and S4 may be performed simultaneously. At least one of Step S3 and Step S4 may be skipped.

## Claims

1. A control device (10) comprising:
a controlling unit (11) for controlling outputs from a plurality of devices (20, 30) such that a total of the outputs from the devices (20, 30) reaches a target output; and
a calculating unit (12) for calculating an accumulated load of each device (20, 30) over a predetermined period of time,
wherein the controlling unit (11) controls the outputs from the devices (20, 30) such that the accumulated loads calculated for the respective devices (20, 30) become more equal to each other and that the total of the outputs from the devices (20, 30) reaches the target output.

2. The control device (10) of claim 1, wherein
the calculating unit (12) calculates a life of each device (20, 30) based on the accumulated load on the device (20, 30), and
the controlling unit (11) controls the outputs from the devices (20, 30) such that the lives of the devices (20, 30) calculated by the calculating unit (12) become more equal to each other and that the total of the outputs from the devices (20, 30) reaches the target output.

3. The control device (10) of claim 1 or 2, wherein
the calculating unit (12) calculates a load increasing rate for each device (20, 30) based on the accumulated load on the device (20, 30), and
the controlling unit (11) controls the outputs from the devices (20, 30) based on the load increasing rates calculated for the devices (20, 30) by the calculating unit (12).

4. The control device (10) of claim 3, wherein when a second one of the devices (20, 30) has a higher load increasing rate than a first one of the devices (20, 30), the controlling unit (11) decreases the output from the second device and increases the output from the first device.

5. The control device (10) of claim 1, wherein
the plurality of devices (20, 30) are a plurality of electric compressors (20), and each electric compressor (20) has a motor (21) provided therein and is configured to hold compressed air in a tank (3) when the motor (21) is driven,
the target output is a target tank pressure, and
the controlling unit (11) controls an output from the motor (21) provided in each electric compressor (20) such that accumulated loads on the electric compressors (20) calculated for the respective electric compressors (20) become more equal to each other and that the compressed air output from the electric compressors (20) allows a pressure within the tank (3) to reach the target tank pressure.

6. The control device (10) of claim 5, wherein the calculating unit (12) calculates the accumulated load on each electric compressor (20) based on (i) at least one of an operation time of a fan (23) for cooling the motor (21) and an operation time of the motor (21) and (ii) at least one value selected from the group consisting of the number of vibrations of a bearing provided in the motor (21), current used to drive the motor (21), voltage used to drive the motor (21), power consumed by the motor (21), an ambient temperature around the motor (21), and the number of rotations of the motor (21).

7. The control device (10) of claim 5 or 6, wherein
the electric compressors (20) are connected to the tank (3) through pipes (4) having different lengths, and
the controlling unit (11) controls the output from the motor (21) in each electric compressor (20) based on the accumulated loads and the lengths of the pipes (4) such that the accumulated loads on the electric compressors (20) become more equal to each other and that the pressure within the tank (3) reaches the target tank pressure.

8. The control device (10) of claim 1, wherein
the plurality of devices (20, 30) are a plurality of brake devices (30) for producing a braking force against a train (1),
the target output is a target deceleration rate of the train (1), and
the controlling unit (11) controls the braking force produced by each brake device (30) such that the measured accumulated loads on the brake devices (30) become more equal to each other and that a deceleration rate of the train (1) reaches the target deceleration rate.

9. The control device (10) of claim 8, wherein
each brake device (30) produces the brake force by driving a friction member (39) with a driving force produced by a driving unit (31), and
the calculating unit (12) calculates the accumulated load on each brake device (30) based on an abrasion amount of the friction member (39).

10. The control device (10) of claim 8, wherein
each brake device (30) includes: a relay valve (5) for adjusting a pressure of compressed air fed from a tank (3); a brake cylinder (31) for receiving the pressure-adjusted compressed air fed thereto; and a friction member (39) for producing a brake force when driven by an output from the brake cylinder (31),
the calculating unit (12) calculates an accumulated load on the relay valve (5) based on a difference between (i) a target pressure of the compressed air fed to the brake cylinder (31), the target pressure being calculated based on the target deceleration rate and (ii) an actual pressure of the compressed air actually fed to the brake cylinder (31), the actual pressure being detected by a sensor, and
the controlling unit (11) controls the relay valves (5) such that the accumulated loads on the relay valves (5) become more equal to each other and that the deceleration rate of the train (1) reaches the target deceleration rate.

11. The control device (10) of any one of claims 8 to 10, wherein
the train (1) is made up of a plurality of cars (2),
the brake devices (30) are provided in each of the cars (2), and
the controlling unit (11) controls the brake force produced by each brake device (30) based on the accumulated loads and a position of a car (2) with the brake devices (30) in the train (1) such that the accumulated loads on the brake devices (30) become more equal to each other and that the deceleration rate of the train (1) reaches the target deceleration rate.

12. A control device (10) comprising:
a controlling unit (11) for controlling outputs from a plurality of electric compressors (20) such that a total of the outputs from the electric compressors (20) reaches a target tank pressure, each electric compressor (20) having a motor (21) provided therein and being configured to hold compressed air in a tank (3) when the motor (21) is driven; and
a calculating unit (12) for calculating an accumulated load on each electric compressor (20) based on (i) at least one of an operation time of a fan (23) for cooling the motor (21) and an operation time of the motor (21) and (ii) at least one value selected from the group consisting of the number of vibrations of a bearing provided in the motor (21), current used to drive the motor (21), voltage used to drive the motor (21), power consumed by the motor (21), an ambient temperature around the motor (21), and the number of rotations of the motor (21),
wherein the controlling unit (11) controls an output from the motor (21) provided in each electric compressor (20) such that the accumulated loads on the electric compressors (20) measured for the respective electric compressors (20) become more equal to each other and that the compressed air output from the electric compressors (20) allows a pressure within the tank (3) to reach the target tank pressure.

13. A control device (10) comprising:
a controlling unit (11) for controlling outputs from a plurality of brake devices (30) such that a total of the outputs from the brake devices (30) provides for a target deceleration rate of a train (1), each brake device (30) being configured to produce a brake force against the train (1) by driving a friction member (39) with a driving force produced by a driving unit (31); and
a calculating unit (12) for calculating an accumulated load on each brake device (30) based on an abrasion amount of the friction member (39),
wherein the controlling unit (11) controls the driving unit (31) provided in each brake device (30) based on the abrasion amount of the friction member (39) such that the accumulated loads on the brake devices (30) become more equal to each other and that a deceleration rate of the train (1) reaches the target deceleration rate.

14. A control device (10) comprising:
a controlling unit (11) for controlling outputs from a plurality of brake devices (30) such that a total of the outputs from the brake devices (30) provides for a target deceleration rate of a train (1), each brake device (30) including: a relay valve (5) for adjusting a pressure of compressed air fed from a tank (3); a brake cylinder (31) for receiving the pressure-adjusted compressed air fed thereto; and a friction member (39) for producing a brake force against the train (1) when driven by an output from the brake cylinder (31); and
a calculating unit (12) for calculating an accumulated load on the relay valve (5) based on a difference between (i) a target pressure of the compressed air fed to the brake cylinder (31), the target pressure being calculated based on the target deceleration rate, and (ii) an actual pressure of the compressed air actually fed to the brake cylinder (31), the actual pressure being detected by a sensor,
wherein the controlling unit (11) controls the relay valve (5) provided in each brake device (30) such that the accumulated loads on the relay valves (5) become more equal to each other and that a deceleration rate of the train (1) reaches the target deceleration rate.
